# EUROPEAN PATENT APPLICATION

(11) **EP 4 451 207 A1**
(43) Date of publication of application: **23.10.2024**
(21) Application number: 22921663.5
(22) Date of filing: 06.12.2022
(51) Int. Cl.: G06T 7/00

(54) **ELECTRONIC DEVICE BASED OPTICAL CAMERA DETECTION METHOD AND STORAGE MEDIUM**

(30) Priority: 24.01.2022 CN 202210082250
(71) Applicant: Huawei Technologies Co., Ltd., Shenzhen, Guangdong 518129 (CN)
(72) Inventor: LU, Hongyu, Shenzhen, Guangdong 518129 (CN); HUANG, Qingchao, Shenzhen, Guangdong 518129 (CN); JIA, Miao, Shenzhen, Guangdong 518129 (CN); LONG, Shuiping, Shenzhen, Guangdong 518129 (CN)
(74) Representative: Goddar, Heinz J.
(86) International application number: PCT/CN2022/136715
(87) International publication number: WO 2023/138239

(57) **Abstract**

This application provides an electronic device-based optical camera detection method and a storage medium. The detection method includes: obtaining two or more photos of a to-be-detected region at different angles through cooperation between a light source and a camera, where the two or more photos have bright spots; using an overlapping region of the two or more photos as a region of interest, and calculating feature information of bright spots of the two or more photos in the region of interest; and determining, based on the feature information of the bright spots, whether an optical camera exists in the region of interest. The optical camera can be detected through cooperation between the camera and the light source.

## Description

This application claims priority to Chinese Patent Application No. 202210082250.9, filed with the China National Intellectual Property Administration on January 24, 2022 and entitled "ELECTRONIC DEVICE-BASED OPTICAL CAMERA DETECTION METHOD AND STORAGE MEDIUM", which is incorporated herein by reference in its entirety.

### TECHNICAL FIELD

This application relates to the field of photoelectric detection and recognition technologies, and specifically, to an electronic device-based optical camera detection method and a storage medium.

### BACKGROUND

With development of information technologies, various optical cameras may be disposed in a place like a bedroom in a hotel, a washroom, or a living room. The optical cameras are characterized by miniaturization, low power consumption, and the like. Therefore, it is difficult to detect the optical cameras, and a detection success rate is low.

### SUMMARY

In view of this, this application provides an electronic device-based optical camera detection method and a storage medium, to resolve a problem that an optical camera is difficult to be detected.

According to a first aspect, this application provides an electronic device-based optical camera detection method. The detection method may include: An electronic device obtains two or more photos through cooperation between a light source and a camera, where the two or more photos have bright spots, and the two or more photos partially overlap. The electronic device calculates feature information of bright spots of the two or more photos in an overlapping region. The electronic device determines, based on the feature information of the bright spots, whether an optical camera exists in the overlapping region. It should be understood that, due to a special structure of a lens component and a surface reflection feature of an image sensor of the optical camera, the optical camera has a feature of a cat-eye effect. Unlike that in specular reflection of a general object, light reflected from the optical camera returns along a path close to that of incident light. With cooperation of the light source, both the optical camera and the general object can form bright spots on a photo. However, based on a difference between feature information of bright spots in different photos, the bright spots in the photos may be analyzed in a manner like image matching, to distinguish the optical camera from the general object. Based on this, the detection method can detect whether a real object corresponding to the bright spot is the optical camera. In addition, because the detection method can be implemented on the electronic device like a mobile phone or a tablet computer, detection is also convenient.

In some implementations, that an electronic device obtains two or more photos through cooperation between a light source and a camera may specifically include: The electronic device controls the light source to emit light at a preset frequency; and the electronic device performs exposure and image capture at different locations via one camera, to obtain the two or more photos. It should be understood that any electronic device having a camera can obtain the two or more photos via one camera. The bright spots formed by the general object and the optical camera can have large differences in brightness, a color, a shape, and the like based on the preset frequency. Therefore, interference from the general object can be avoided, to reduce image matching difficulty, and improve image matching accuracy.

In some implementations, that the electronic device determines, based on the feature information of the bright spots, whether an optical camera exists in the overlapping region may specifically include: The electronic device analyzes the feature information of the bright spots in the overlapping region; the electronic device determines whether a bright spot whose location is unchanged exists in the overlapping region; and when the bright spot whose location is unchanged exists in the overlapping region, the electronic device determines that the bright spot whose location is unchanged is the optical camera. It should be understood that, for two or more photos obtained via one camera, due to a difference between the photos, bright spots formed by the general object correspond to locations in different world coordinates in different photos; and because the optical camera has the feature of the cat-eye effect, bright spots formed by the optical camera correspond to locations in a same world coordinate in the different photos. Therefore, when the bright spot whose location is unchanged exists in the overlapping region, it may be determined that the real object corresponding to the bright spot is the optical camera.

In some implementations, that an electronic device obtains two or more photos through cooperation between a light source and a camera may specifically include: The electronic device controls the light source to emit light at a preset frequency; and the electronic device performs exposure and image capture via at least two cameras, to obtain the two or more photos. It should be understood that, when the electronic device has two or more cameras, the two or more photos may be obtained via at least two of the cameras. The bright spots formed by the general object and the optical camera can have large differences in brightness, a color, a shape, and the like based on the preset frequency. Therefore, interference from the general object can be avoided, to reduce image matching difficulty, and improve image matching accuracy.

In some implementations, the at least two cameras are two cameras, and distances between the two cameras and the light source are different; or the at least two cameras are a plurality of cameras; and in the plurality of cameras, distances between at least two cameras and the light source are different. It should be understood that, when a plurality of cameras are used to obtain a plurality of photos, distances between at least two cameras in the plurality of cameras and a flash are different, and it is not necessarily required that distances between all the cameras and the flash are different.

In some implementations, that the electronic device determines, based on the feature information of the bright spots, whether an optical camera exists in the overlapping region may specifically include: The electronic device analyzes the feature information of the bright spots in the overlapping region; the electronic device determines whether feature information of a bright spot in the overlapping region changes; and when the feature information of the bright spot in the overlapping region changes, the electronic device determines that the bright spot whose feature information changes is the optical camera. It should be understood that, for the two or more photos obtained via the at least two cameras, because a distance between the at least two cameras is short, there is a large overlapping region between the formed photos. Different from that in the foregoing other implementations, because distances between the at least two cameras and a flash are different, the bright spots formed by the general object have consistent feature information in the different photos; and because the optical camera has the feature of the cat-eye effect, the bright spots formed by the optical camera have different feature information in the different photos. For example, the bright spots formed by the optical camera have a large brightness difference in the different photos. Therefore, when the bright spot whose feature information changes exists in the overlapping region, it may be determined that a real object corresponding to the bright spot is the optical camera.

In some implementations, that the electronic device calculates feature information of bright spots of the two or more photos in an overlapping region may specifically include: The electronic device performs image matching on the two or more photos, to determine the overlapping region; the electronic device marks locations of the bright spots in the photos; and the electronic device calculates, based on the overlapping region, the feature information of the bright spots located in the overlapping region.

In some implementations, after the electronic device determines, based on the feature information of the bright spots, whether the optical camera exists in the overlapping region, the method further includes: When it is determined that the optical camera exists in the overlapping region, the electronic device saves or marks a photo including the optical camera; and the electronic device presents the photo including the optical camera. Based on this, when the photos need to be used, it can be convenient for a user to view, send, or export the photos.

In some implementations, after it is determined, based on the feature information of the bright spots, whether the optical camera exists in the overlapping region, the method further includes: When it is determined that the optical camera exists in the overlapping region, the electronic device continuously tracks a bright spot corresponding to the optical camera.

In some implementations, the light source is an external light source; or the light source is the flash of the electronic device. When the light source is the external light source, the external light source may be a part of a light-emitting device.

In some implementations, the light source is configured to emit one, two, or more types of monochromatic light; and the feature information of the bright spots includes color information corresponding to the monochromatic light. It should be understood that, for a steady-on interference source, because a steady-on interference source that can actively emit light is difficult to be affected by the monochromatic light emitted by the light source, in the photos, bright spots formed by the steady-on interference source have consistent feature information. For example, the bright spots formed by the steady-on interference source are consistent in terms of a color, brightness, and the like, and the bright spots formed by the optical camera have, based on the monochromatic light emitted by the light source, feature information corresponding to the bright spots. Therefore, the steady-on interference source and the optical camera can be distinguished.

In some implementations, the preset frequency may be a fixed frequency or a duty cycle. The light source may flicker at the preset frequency.

In some other implementations, the preset frequency may alternatively be a frequency higher than 60 Hz. It should be understood that, for a human eye, a flicker frequency that can be identified is generally below 60 Hz. Therefore, when the preset frequency of the light source is higher than 60 Hz, it is difficult for the user to feel that the light source flickers.

According to a second aspect, this application further provides a computer-readable storage medium. The computer-readable storage medium stores instructions, and the instructions may be used to perform the detection method in the foregoing implementations.

According to a third aspect, this application further provides an electronic device-based optical camera detection method. The detection method includes: An electronic device sequentially obtains a first photo and a second photo via one camera based on a light source, where both the first photo and the second photo have bright spots, and the first photo and the second photo partially overlap. The electronic device separately calculates location information of bright spots of the first photo and the second photo in an overlapping region. The electronic device determines whether a bright spot whose location is unchanged exists in the overlapping region. When the bright spot whose location is unchanged exists in the overlapping region, the electronic device determines that the bright spot whose location is unchanged is an optical camera.

In some implementations, that an electronic device sequentially obtains a first photo and a second photo via one camera based on a light source specifically includes: The electronic device controls the light source to emit light at a preset frequency. The electronic device performs exposure and image capture at different locations via the camera, to obtain the first photo and the second photo.

In some implementations, that the electronic device separately calculates location information of bright spots of the first photo and the second photo in an overlapping region specifically includes: The electronic device determines the overlapping region of the first photo and the second photo. The electronic device marks a location of a bright spot of the first photo in the overlapping region, and marks a location of a bright spot of the second photo in the overlapping region.

According to a fourth aspect, this application further provides an electronic device-based optical camera detection method. The detection method includes: An electronic device simultaneously obtains a first photo and a second photo via two cameras based on a light source, where both the first photo and the second photo have bright spots, and the first photo and the second photo partially overlap; the electronic device calculates brightness information of bright spots of the first photo and the second photo in an overlapping region; the electronic device determines whether brightness information of a bright spot in the overlapping region changes; and when a bright spot whose brightness change is greater than a brightness threshold exists in the overlapping region, the electronic device determines that the bright spot whose brightness change is greater than the brightness threshold is an optical camera.

In some implementations, that an electronic device simultaneously obtains a first photo and a second photo via two cameras based on a light source specifically includes: The electronic device controls the light source to emit light at a preset frequency; and the electronic device simultaneously performs exposure and image capture via the two cameras, to obtain the first photo and the second photo.

In some implementations, that the electronic device calculates brightness information of bright spots of the first photo and the second photo in an overlapping region specifically includes: The electronic device determines the overlapping region of the first photo and the second photo; the electronic device calculates brightness of a bright spot of the first photo in the overlapping region, and calculates brightness of a bright spot of the second photo in the overlapping region.

In this application, two or more photos of a to-be-detected region can be obtained through cooperation between the camera and the light source. By comparing the obtained two or more photos, a bright spot with a cat-eye effect can be searched for. Based on this, whether an optical camera exists in the to-be-detected region can be detected.

### BRIEF DESCRIPTION OF DRAWINGS

FIG. 1 is a diagram of a framework of an electronic device according to an embodiment of this application;
FIG. 2 is a flowchart of an electronic device-based optical camera detection method according to an embodiment of this application;
FIG. 3 is a diagram of the back of an electronic device according to an embodiment of this application;
FIG. 4 is a diagram of the back of an electronic device according to another embodiment of this application;
FIG. 5 is a flowchart of a detection method according to another embodiment of this application;
FIG. 6 is a diagram of a graphical user interface based on a detection method according to an embodiment of this application;
FIG. 7 is a diagram of a graphical user interface based on a detection method according to another embodiment of this application;
FIG. 8 is a diagram of a first photo obtained based on a detection method according to an embodiment of this application;
FIG. 9 is a diagram of a second photo obtained based on a detection method according to an embodiment of this application;
FIG. 10 is a diagram of marking an optical camera in a second photo according to an embodiment of this application;
FIG. 11 is a flowchart of a detection method according to still another embodiment of this application;
FIG. 12 is a diagram of a first photo obtained based on a detection method according to another embodiment of this application;
FIG. 13 is a diagram of a second photo obtained based on a detection method according to another embodiment of this application; and
FIG. 14 is a diagram of marking an optical camera in a second photo according to another embodiment of this application.

### DESCRIPTION OF EMBODIMENTS

Terms in embodiments of this application are used only for the purpose of describing specific embodiments, but are not intended to limit this application. As used in the specification and the appended claims of this application, the singular expression "a", "an", "the", "the foregoing", "such a", or "this" is intended to also include a plural expression unless otherwise clearly indicated in the context.

Reference to "an embodiment", "some embodiments", or the like described in this specification indicates that at least one embodiment of this application includes a specific feature, structure, or characteristic described with reference to the embodiments. Therefore, statements such as "in an embodiment", "in some embodiments", "in some other embodiments", "in other embodiments" and "in some implementations" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

With development of imaging technologies and communication technologies, various miniaturized optical cameras are gradually developed and used. The miniaturized optical cameras have high concealment, and it is difficult for a user to notice the optical cameras. However, when the optical cameras are integrated with a surrounding environment, it is more difficult for the user to find the optical cameras. For example, an optical camera is embedded in a wall with a mural, and it is difficult for the user to notice the optical camera in the wall. Alternatively, an optical camera is disposed in a jack of a socket in a room, and the user seldom observes details of the jack. Alternatively, an optical camera is disposed in a corner of a room, and the user seldom walks to the corner of the room for observation.

Based on this, in various actual scenarios, such optical cameras may be hidden in various corners, and are difficult to be identified.

For these cases, there is a detection device and detection software in the market that are specially used to detect the optical camera. The detection software detects whether the optical camera exists by using a detection method of a wireless network technology.

For example, the user may implement detection via the detection device. In one aspect, because the detection device is expensive, a small quantity of users purchase this type of device, and a quantity of target users is small. In another aspect, the detection device has a large volume and a heavy weight, and is inconvenient. For a general home user, costs of performing detection via the detection device are high, the user may not carry the detection device with the user even if purchasing the detection device, and the detection device is inconvenient to use and is used at a low frequency.

For another example, if an optical camera in a current environment transmits data through a wireless network, the user may detect the optical camera via the detection software. It should be understood that the foregoing detection software can detect each optical camera through the wireless network in the current environment, to determine whether the optical camera exists. However, the detection software generally can detect only an optical camera that is connected to a network through the wireless network and is working, and a detection success rate is also low.

In addition, because the detection software is implemented based on the wireless network, types of optical cameras that can be covered by the detection software are limited. The detection software basically cannot detect an optical camera that stores data locally, an optical camera that is connected to a network through a wired network, and the like.

As described above, general detection software and a general detection device can detect the optical cameras to some extent, but an actual detection effect is limited.

Based on the foregoing technical problem, the following embodiments of this application provide an electronic device-based optical camera detection method. Based on a difference between an optical feature of an optical camera and an optical feature of a general object, the detection method provided in each embodiment may implement detection on the optical camera in a manner like image matching. It should be understood that, the detection method provided in each embodiment may be implemented on an electronic device like a mobile phone or a tablet computer, without using a dedicated detection device, and detection is more convenient. In addition, detection efficiency and a detection success rate of the optical camera can be further improved, to reduce costs of detecting the optical camera by the user.

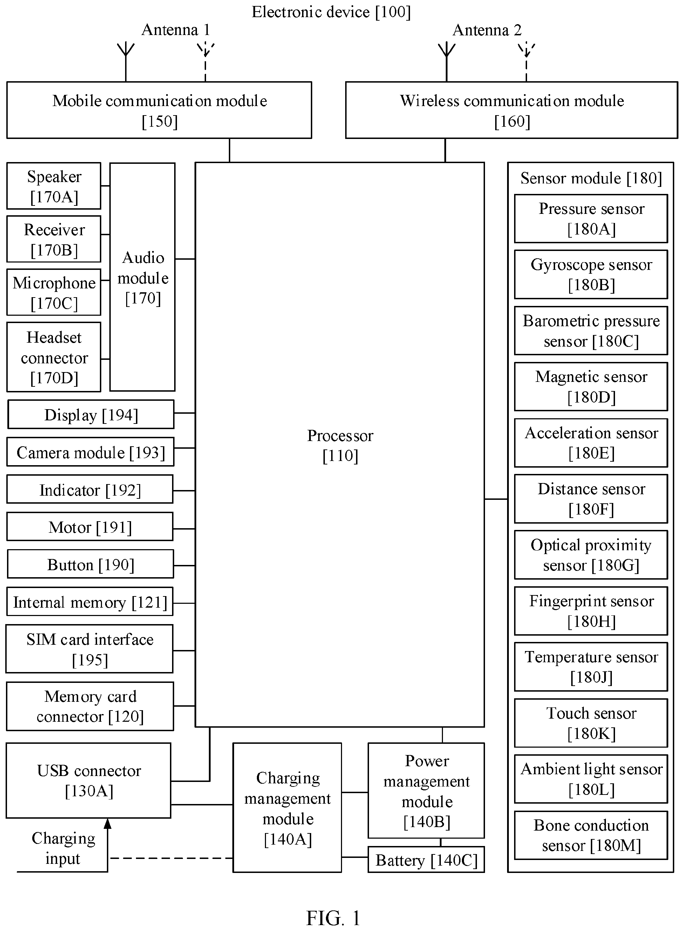

Refer to FIG. 1. An embodiment of this application provides an electronic device 100. The electronic device 100 may include at least one of devices each having a camera, such as a mobile phone, a foldable electronic device, a tablet computer, a desktop computer, a laptop computer, a handheld computer, a notebook computer, an ultra-mobile personal computer, a netbook, a cellular phone, a PDA, an AR device, a VR device, an MR device, an artificial intelligence device, a wearable device, a vehicle-mounted device, a smart home device, and a smart city device. A type of the electronic device 100 is not specially limited in embodiments of this application.

The electronic device 100 may include a processor 110, an internal memory 121, a USB connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset connector 170D, a sensor module 180, a button 190, a motor 191, an indicator 192, a camera module 193, a display 194, a memory card connector 120, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The structure shown in this embodiment of this application does not constitute a limitation on the electronic device 100. In some other embodiments of this application, the electronic device 100 may include more or fewer components than those shown in the figure. The illustrated components may be implemented in a manner of hardware, software, a combination of software and hardware, or the like.

The processor 110 may include one, two, or more processing units. For example, the processor 110 may include at least one of processing units such as an application processor, a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components, or may be integrated into one, two or more processors.

The processor 110 may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 may be a cache. The cache may store instructions or data used or frequently used by the processor 110.

In some embodiments, the processor 110 may include one, two or more interfaces. A type of the interface may include at least one of interfaces such as an integrated circuit I2C interface, an I2S interface, a PCM interface, a UART interface, an MIPI, a GPIO interface, a SIM interface, and a USB interface. The processor 110 may be connected to a module like a touch sensor, an audio module, a wireless communication module, a display, or a camera through at least one of the foregoing interfaces.

It may be understood that an interface connection relationship between the modules shown in this embodiment of this application is merely an example for description, and does not constitute a limitation on the electronic device 100. In some other embodiments of this application, the electronic device 100 may alternatively use an interface connection manner different from that in the foregoing embodiment, or use a combination of a plurality of interface connection manners.

The electronic device 100 may implement a display function via the GPU, the display 194, the application processor, and the like. The GPU is a microprocessor for image processing, and is connected to the display 194 and the application processor. The GPU is configured to: perform mathematical and geometric computation and render an image. The processor 110 may include one, two, or more GPUs that execute program instructions to generate or change display information.

The display 194 is configured to display an image, a video, and the like. In some embodiments, the electronic device 100 may include one, two, or more displays 194. The display 194 may be at least one of an LCD, an OLED display, an AMOLED display, an FLED display, a mini-LED display, a micro-LED display, a micro-OLED display, a quantum dot light-emitting diode (quantum dot light-emitting diode, QLED) display, an electronic ink screen, or the like.

The electronic device 100 may implement an image shooting function via the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. For example, during image shooting, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a photosensitive element of a camera of the color camera module may include a CCD or a CMOS phototransistor. The photosensitive element converts an optical signal into an electrical signal, and then transmits the electrical signal to the ISP to convert the electrical signal into a digital image signal. The ISP outputs the digital image signal to the DSP for processing.

In some embodiments, the 3D sensing module may be a structured light 3D sensing module. The structured light 3D sensing module may include an infrared transmitter, an infrared camera module, and the like. The structured light 3D sensing module first emits a light spot of a specific pattern onto a photographed object, and then receives a light spot pattern code on a surface of the object, to further compare a difference and sameness between the light spot pattern code and the original projected light spot, and determine three-dimensional coordinates of the object. The three-dimensional coordinates may include a distance between the electronic device 100 and the photographed object. The 3D sensing module may obtain a distance (namely, a depth) between the 3D sensing module and the photographed object by using time of turning back an infrared ray, to obtain a 3D depth of field image.

The structured light 3D sensing module may be further used in the fields such as facial recognition, somatic game consoles, and industrial machine vision detection. The 3D sensing module may also be used in the fields such as game consoles, AR, and VR.

In some other embodiments, the camera module 193 may further include two or more cameras. The two or more cameras may include a color camera, and the color camera may be configured to collect color image data of a photographed object. The two or more cameras may use a stereoscopic vision technology to collect depth data of a photographed object.

In some embodiments, the electronic device 100 may include one, two, or more camera modules 193. The electronic device 100 may include one front-facing camera module 193 and one rear-facing camera module 193. The front-facing camera module 193 may be configured to collect color image data and depth data of a photographer, and the rear-facing camera module may be configured to collect color image data and depth data of a photographed object (like a character or a scenery) facing the photographer.

In some embodiments, the CPU, the GPU, or the NPU in the processor 110 may process color image data and depth data that are collected by the camera module 193. In some embodiments, the NPU may identify, by using a neural network algorithm based on a skeleton point identification technology, for example, a convolutional neural network (CNN) algorithm, color image data collected by the camera module 193, to determine a skeleton point of the photographed character. The CPU or the GPU may alternatively be configured to run a neural network algorithm to determine a skeleton point of the photographed character based on the color image data. In some embodiments, the CPU, the GPU, or the NPU may be further configured to: determine a figure (for example, a body proportion and a fatness and thinness degree of a body part between skeleton points) of the photographed character based on depth data collected by the camera module 193 (which may be the 3D sensing module) and the identified skeleton point, further determine a beautification parameter for the photographed character, and finally process a photographed image of the photographed character based on the body beautification parameter, so that a body shape of the photographed character in the photographed image is beautified.

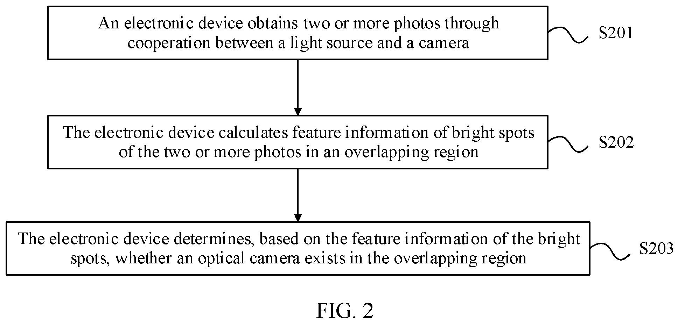

Refer to FIG. 2. In some embodiments, the detection method may include but is not limited to the following steps.

S201: An electronic device obtains two or more photos through cooperation between a light source and a camera.

In some embodiments, through cooperation between the light source and the camera, the camera may perform exposure and image capture on external space, to obtain two or more photos of the external space. The two or more photos may be photos obtained by the camera by performing exposure and image capture on the external space at different locations. For example, the electronic device may obtain, at different locations, two or more photos of a to-be-detected region of the external space.

In some embodiments, corresponding to the electronic device in the foregoing example, the light source may be a built-in light source of the electronic device. For example, the light source may be a flash of the electronic device.

In some other embodiments, when the electronic device has no flash or does not use a flash, the light source may alternatively be an external light source (not shown in the figure). This is not limited. For example, the external light source may be a table lamp, a flashlight, or a light-emitting device specially configured to detect an optical camera.

In some embodiments, the light-emitting device may be further sleeved on an outer surface of the electronic device. In addition to being used as the light source, the light-emitting device may further protect the electronic device. For example, the electronic device is a mobile phone, the light-emitting device is a mobile phone protection apparatus, and the external light source may be a part of the mobile phone protection apparatus. The mobile phone protection apparatus may be configured to accommodate the mobile phone, and may be further provided with an LED lamp around a corresponding camera of the mobile phone. Based on a detection requirement on the optical camera, the LED lamp may emit specific light, to cooperate with the camera of the mobile phone.

In some embodiments, the mobile phone protection apparatus may be powered by the mobile phone. For example, the mobile phone supplies power to the mobile phone protection apparatus in a wireless manner or a data interface manner. In addition, a power supply is disposed in the mobile phone protection apparatus, and the power supply may supply power to the LED lamp.

In some embodiments, the light source may emit monochromatic light. For example, the light source may emit white light or yellow light. In some other embodiments, the light source may emit two or more types of monochromatic light. For example, the light source may emit white light and yellow light; or the light source may emit white light, yellow light, red light, and the like. This is not limited.

It should be understood that a portable electronic device like a mobile phone or a tablet computer generally has one, two, three, four, or five cameras, or the like. Therefore, in the detection method provided in embodiments of this application, an appropriate camera may be selected based on a relative location relationship between each camera and the light source.

In some embodiments, when the light source is the flash of the electronic device, and there are two or more cameras, at least one camera in the cameras may be selected based on a relative location relationship between the flash and the cameras. For example, a camera that is closest to the flash may be selected; or a camera that is at a medium distance from the flash may be selected; or a camera that is farthest from the flash may be selected.

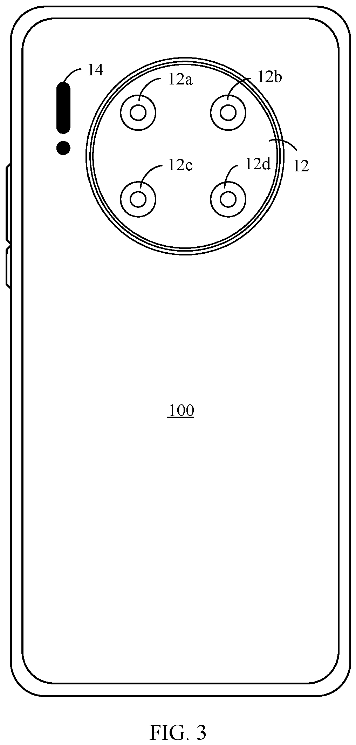

Refer to FIG. 3. In some embodiments, for example, the electronic device 100 is a mobile phone, and the electronic device 100 may include a rear camera module 12 and a flash 14. Refer to both FIG. 1 and FIG. 3. The rear camera module 12 may be a part of the camera module 193.

In some embodiments, the rear camera module 12 may include a camera 12a, a camera 12b, a camera 12c, and a camera 12d. The four cameras (12a to 12d) are arranged in a 2X2 matrix, and the flash is located on one side of the cameras (12a, 12c) and is away from the cameras (12b, 12d). It should be understood that, for the detection method provided in each embodiment, the flash 14 may be selected as the light source. Based on an actual requirement, at least one camera in the cameras (12a to 12d) may be selected to obtain the photo of the to-be-detected region.

It should be understood that, when the two or more photos are obtained via one camera, the electronic device may obtain photos of the to-be-detected region at different angles by moving a specific distance. When the two or more photos are obtained via at least two cameras, the electronic device may move or may not move based on a distance between the at least two cameras and a light source, and a difference between locations, structures, and performance of the at least two cameras. This is not limited.

In some other embodiments, the light source may alternatively be a ring-shaped, fan-shaped, or dot-matrix flash that is disposed around a camera in the electronic device. For example, the light source may be a ring-shaped flash disposed around a wide-angle camera.

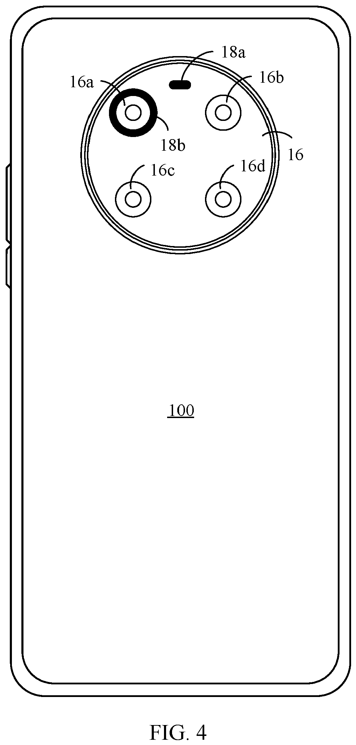

Refer to FIG. 4. In some other embodiments, the electronic device 100 may alternatively include a rear camera module 16, a first flash 18a, and a second flash 18b. Refer to both FIG. 1 and FIG. 4. The rear camera module 16 may be a part of the camera module 193.

In some embodiments, the rear camera module 16 may include a camera 16a, a camera 16b, a camera 16c, and a camera 16d. The first flash 18a is located on one side of the cameras (16a, 16b) and is far away from the cameras (16c, 16d). The second flash 18b is circular and surrounds the camera 16a. It should be understood that, for the detection method provided in each embodiment, the first flash 18a may be selected as the light source. In addition, the second flash 18b may alternatively be selected as the light source, to cooperate with at least one of the cameras (16a to 16d) to obtain the photo of the to-be-detected region.

In some embodiments, when light emitted by the light source is projected onto a real object in the to-be-detected region, the light may generate an optical phenomenon like diffuse reflection or scattering, and be reflected in a direction away from the real object. A part of the reflected light may be transmitted to the camera and captured by the camera, to form a bright spot corresponding to the foregoing optical phenomenon on the photo.

In some embodiments, based on factors such as a feature of the real object in the to-be-detected region and an image shooting angle, any photo may have one, two, or more bright spots; or any photo may have no bright spot. This is not limited.

It should be understood that, in the detection method provided in each embodiment of this application, the photo may further be a preview frame picture obtained through cooperation between the camera and the light source, and is not necessarily a picture that needs to be obtained by using a function like image shooting. A preview photo may be saved in a cache, and a photographed photo may be saved in an internal memory. Based on this, the two or more photos may further be two or more preview frame pictures obtained through cooperation between the camera and the light source in a process of detecting the to-be-detected region.

In some embodiments, the to-be-detected region may be a corner, a washroom, or the like of a bedroom. It should be understood that a user may adaptively select the to-be-detected region based on an actual detection requirement. This is not limited.

In some other embodiments, the to-be-detected region may alternatively be a living room, a doodle wall, or the like; or the to-be-detected region may be some small objects, such as a socket, a vase, or a potted plant.

In some embodiments, for the detection method provided in this application, the user may view the obtained two or more photos through the electronic device. In some other embodiments, the user may not view the obtained two or more photos, and the two or more photos may be in a background of the electronic device or transmitted to a cloud for processing.

S202: The electronic device calculates feature information of bright spots of the two or more photos in an overlapping region.

In some embodiments, the photo is processed by using an image processing algorithm, so that the bright spot can be identified from the photo. The feature information of the bright spot may include one, two, or more types of information such as a location, brightness, a brightness change rate, a size, a color, and a shape of the bright spot in the photo. This is not limited. The location of the bright spot in the photo may mean establishing a relationship between the bright spot and another pixel around the bright spot after image matching is performed, to determine a relative location of the bright spot.

For example, the feature information of the bright spot may include location information and brightness information of the bright spot in the photo. Alternatively, the feature information of the bright spot may include location information, color information, and brightness information of the bright spot in the photo.

In some embodiments, the two or more photos may be obtained for a region. Based on this, image matching may be performed on the two or more photos, to mark locations of the bright spots in the overlapping region of the two or more photos.

In some embodiments, the overlapping region of the two or more photos may be understood as a region of interest (ROI, Region of Interest). In the detection method provided in embodiments of this application, the overlapping region may be equivalent to the ROI.

In some embodiments, when a plurality of photos are obtained via the camera, an ROI may exist between any two photos, and it does not necessarily pose a limitation that there is only one ROI between the plurality of photos.

For example, three photos are obtained via the camera, there is a first ROI between a first photo and a second photo, and there is a second ROI between the second photo and a third photo. In addition, there may be an overlapping region between the first ROI and the second ROI, or there may be no overlapping region between the first ROI and the second ROI. It should be understood that, when there is still an overlapping region between the first ROI and the second ROI, it may be determined that there is also an overlapping region between the first photo and the third photo.

In some other embodiments, when there is no overlapping region between the obtained two or more photos, the user may be prompted to re-obtain a photo of the to-be-detected region, or the user may be guided to perform another operation.

S203: The electronic device determines, based on the feature information of the bright spots, whether an optical camera exists in the overlapping region.

In step S203, a ROI of the obtained two or more photos may be analyzed. It should be understood that, whether a real object corresponding to each bright spot has a feature of a cat-eye effect may be determined based on feature information of each bright spot. The cat-eye effect means that, when incident light is emitted to the optical camera within a field of view (FOV, Field of View) range of the optical camera, due to a special structure of a lens component and a surface reflection feature of an image sensor of the optical camera, light reflected from the optical camera returns along a path close to that of the incident light.

Based on the cat-eye effect, after the reflected light of the optical camera is received by the camera, the bright spot is formed at a location corresponding to a same world coordinate in the photo.

General reflected light is reflected through a path in which a reflection angle is equal to an incident angle. After reflected light of a general reflector is received by the camera, the reflected light does not form a bright spot at a location corresponding to a same world coordinate in each photo. For example, when a bright spot formed based on general reflection appears at a location A of an ROI of a photo, the bright spot appears at a location B of an ROI of another photo, where the location A is different from the location B.

For ease of understanding, a real object having the cat-eye effect is referred to as a cat-eye reflection source, and a real object with general reflection (or a general object) is referred to as a general reflection source. Without opposite teachings, the cat-eye reflection source in this specification may be equivalent to the optical camera.

Both a bright spot formed based on the cat-eye reflection source and a bright spot formed based on the general reflection source may be reflected in a photo, but feature information of the two is greatly different. Therefore, in the detection method provided in embodiments of this application, the two types of reflection sources may be distinguished in a manner like image matching, to identify the optical camera.

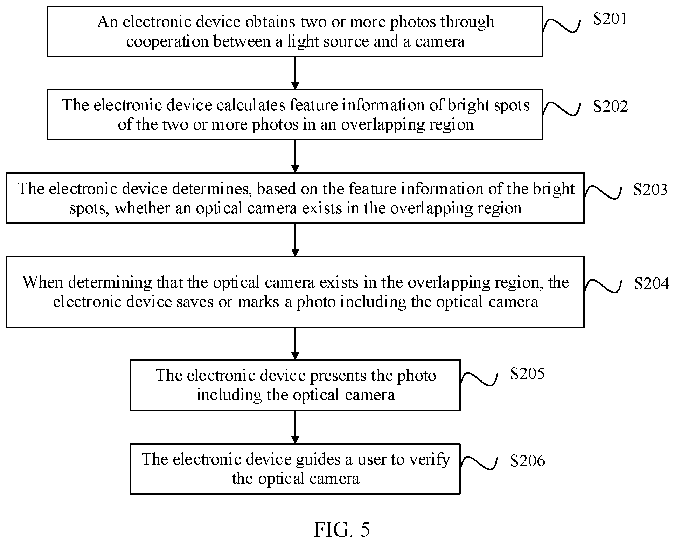

Refer to FIG. 5. When there is a bright spot corresponding to the cat-eye reflection source, the detection method provided in embodiments of this application may further include the following steps.

S204: When determining that the optical camera exists in the overlapping region, the electronic device saves or marks a photo including the optical camera.

In some embodiments, marking may be marking the optical camera in the saved photo on a premise that the photo is saved.

In some other embodiments, marking may alternatively be marking, on a graphical user interface of the electronic device, a bright spot corresponding to the optical camera in the photo.

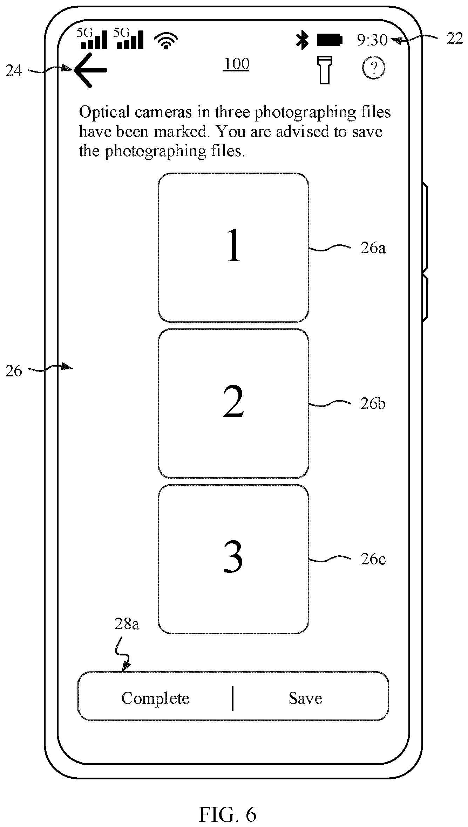

Refer to FIG. 6. In some embodiments, the electronic device 100 may present the graphical user interface corresponding to the detection method. The graphical user interface of the electronic device 100 may include a status bar 22, a navigation bar 24, a main view region 26, and a first label bar 28a.

In some embodiments, the status bar 22 includes, for example, a signal strength icon, a WLAN icon, a Bluetooth icon, a current remaining battery level icon, and a time icon.

In some other embodiments, the status bar 22 may further include an NFC icon, a sound icon, a WLAN hotspot icon, and the like. This is not limited.

In some embodiments, the navigation bar 24 may provide information about the current graphical user interface. As shown in FIG. 6, on the graphical user interface corresponding to the detection method, an icon that can be used by the user to implement touch, like a return key or a light source control switch, and an icon that provides use help may be provided in the navigation bar.

In some embodiments, the main view region 26 may provide the obtained two or more photos. As shown in FIG. 6, the main view region 26 of the electronic device may include three photos (26a, 26b, 26c). In FIG. 6, a number 1, a number 2, and a number 3 are used as examples for distinguishing the photos (26a, 26b, 26c), but are not intended to limit content presented by the photos (26a, 26b, 26c).

In some embodiments, the first label bar 28a may include a "Complete" icon and a "Save" icon, so that the user performs a touch control operation. After responding to a touch control operation performed by the user on the "Complete" icon, the electronic device may exit detection. After responding to a touch control operation performed by the user on the "Save" icon, the electronic device 100 may save the taken photos (26a, 26b, 26c).

In some other embodiments, the electronic device may further provide physical buttons. The physical buttons may be tapped by the user, to equivalently complete at least some functions of the foregoing touch control operation. The physical keys and the touchable icon may exist one or coexist.

The "save" may mean saving, in response to a save operation of the user, the photo including the optical camera. Alternatively, the "save" may be that the electronic device automatically saves the photo including the optical camera. Based on the step S204, it may be convenient for the user or another person to perform an operation like viewing, sending, or exporting on the photos.

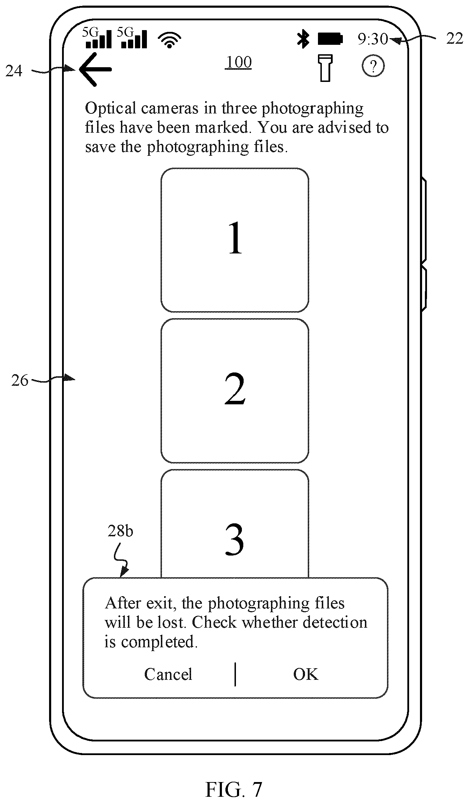

In some embodiments, after the electronic device responds to a detection exit operation of the user, the electronic device may further automatically delete the obtained two or more photos. As shown in FIG. 7, before responding to the detection exit operation of the user, the electronic device may further provide a second label bar 28b. The second label bar 28b includes prompt information, a "Cancel" icon, and an "OK" icon, so that the user reconfirms whether to exit detection on the optical camera, to reduce a probability of a misoperation.

S205: The electronic device presents the photo including the optical camera.

In some embodiments, the photos may be sequentially presented on the graphical user interface of the electronic device, or the photos may be presented on another device connected to the electronic device. This is not limited.

S206: The electronic device guides the user to verify the optical camera.

In some embodiments, the guiding manner may be marking the bright spot corresponding to the optical camera in the photo, so that the user searches, based on the photo, for the real object corresponding to the bright spot.

In some other embodiments, the guiding manner may alternatively be merging the obtained two or more photos to form a panorama. The user may determine, based on the panorama, a location of the real object corresponding to the bright spot more easily.

In some other embodiments, when the two photos are obtained via the camera, a bright spot corresponding to the cat-eye reflection source may not exist in the two photos. When the plurality of photos are obtained via the camera, a bright spot corresponding to a cat-eye reflection source may also exist or may not exist in the plurality of photos. When the bright spot corresponding to the cat-eye reflection source does not exist, the user may be prompted to re-obtain a photo of the to-be-detected region, to perform the foregoing steps again; or it may be determined that no optical camera exists in the to-be-detected region.

In some embodiments, when the two or more photos are obtained via one camera, the detection method may specifically include the following steps.

The electronic device analyzes the feature information of the bright spots in the two or more photos, to determine whether a bright spot whose location is unchanged exists in the overlapping region.

As described above, because the two or more photos are obtained via a same camera, the camera of the electronic device may be adjusted in a manner of changing a camera coordinate location of the camera, for example, rotation, translation, or a combination of translation and rotation. Based on this, the electronic device may obtain the two or more photos at different angles and at different moments. A measurement unit of the different moments may be second, minute, hour, or the like.

For example, within several seconds, the user may obtain the two photos of the to-be-detected region through cooperation between the camera and the light source, to subsequently analyze whether the optical camera exists. For another example, within several hours, the user may obtain a large quantity of photos of the to-be-detected region through cooperation between the camera and the light source, to subsequently comprehensively analyze whether the optical camera exists in the to-be-detected region.

It should be understood that, based on image matching performed on the two or more photos, it may be determined whether a location of a bright spot relative to a surrounding environment changes in different photos. Therefore, the bright spot whose location is unchanged may be a bright spot that appears in the overlapping region of at least two photos and that corresponds to a same world coordinate location.

When the bright spot whose location is unchanged exists in the ROI, it is determined that the optical camera exists in the ROI.

It should be understood that, when the bright spot whose location is unchanged exists, it may be determined that a real object corresponding to the bright spot is the cat-eye reflection source.

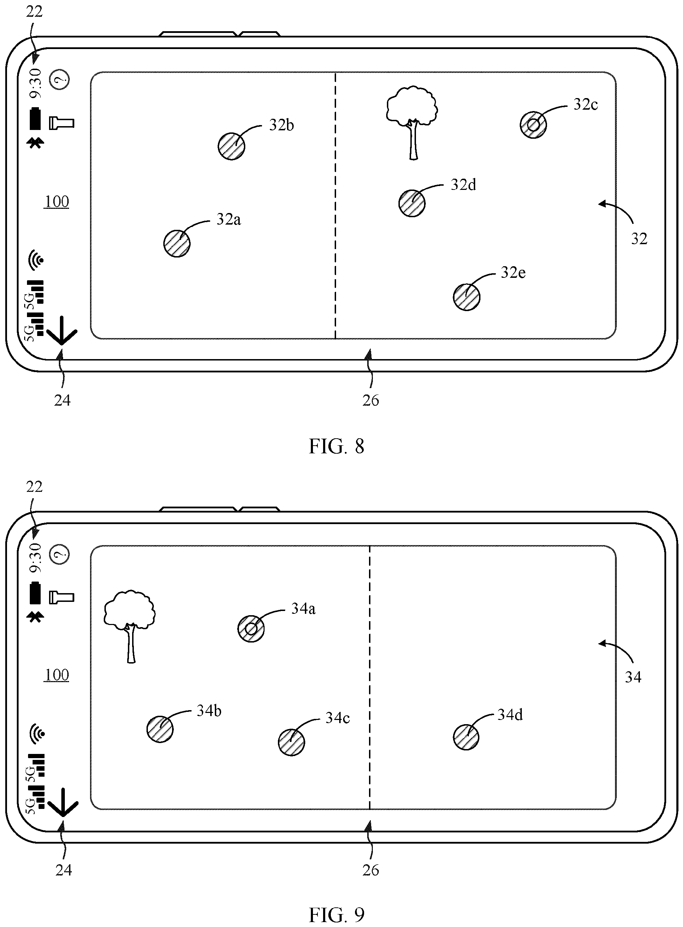

Refer to both FIG. 8 and FIG. 9. An example in which the electronic device obtains two photos of the to-be-detected region via one camera is used for description.

At a first moment, the user may obtain a first photo 32 at a first angle. The first photo 32 is recognized by using an image feature recognition algorithm. For example, the first photo 32 includes five bright spots (32a, 32b, 32c, 32d, 32e). The five bright spots (32a to 32e) may be formed when the light of the light source is reflected from a general reflection source or a cat-eye reflection source and captured by the camera.

At a second moment, the user may appropriately move (for example, translate, rotate, or translate and rotate) the mobile phone, to obtain a second photo 34 at a second angle. The second moment is after the first moment, and based on adjustment of a location of the mobile phone, the second angle is different from the first angle. Similar to the first photo 32, the second photo 34 is recognized by using the image feature recognition algorithm. For example, the second photo 34 includes four bright spots (34a, 34b, 34c, 34d).

As shown in FIG. 8 and FIG. 9, image matching is performed on the first photo 32 and the second photo 34, so that the electronic device may determine that an overlapping region exists between the second photo 34 and the first photo 32. The first photo 32 has three bright spots (32c, 32d, 32e) in the overlapping region, and the second photo has three bright spots (34a, 34b, 34c) in the overlapping region. Based on feature information of the three bright spots (32c, 32d, 32e) in the first photo and the three bright spots (34a, 34b, 34c) in the second photo, it may be determined that the bright spot 32c in the first photo 32 and the bright spot 34a in the second photo 34 correspond to a same real object. Therefore, it may be determined that the bright spots (32c, 34a) are bright spots whose locations are unchanged, and a real object corresponding to the bright spots (32c, 34a) is the cat-eye reflection source.

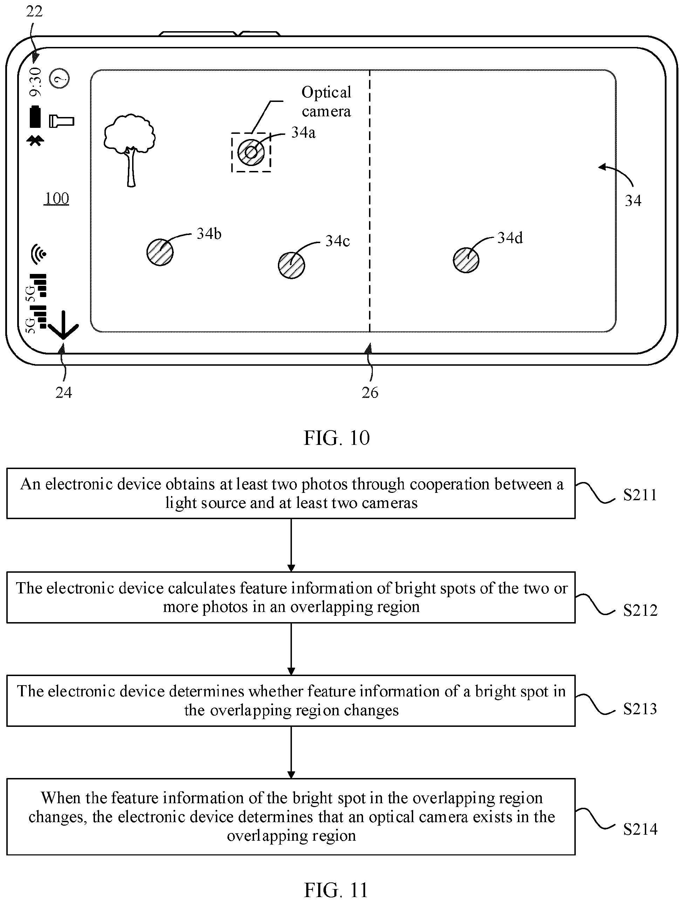

In some embodiments, for the identified optical camera, the electronic device may mark the bright spots (32c, 34a) corresponding to the optical camera in the obtained first photo 32 or the obtained second photo 34. As shown in FIG. 10, the electronic device marks the bright spot 34a in the second photo 34, and marked content is, for example, "Optical camera".

In some other embodiments, the electronic device may mark, in the obtained first photo 32 or second photo 34, bright spots (32d, 32e, 34b, 34c) corresponding to the general reflection sources.

In some embodiments, the light source may further emit the monochromatic light at a preset frequency, to obtain the two or more photos. It should be understood that, based on the monochromatic light emitted at the preset frequency, bright spots formed by the general reflection source and the cat-eye reflection source may have large differences in brightness, a color, a shape, and the like. Therefore, interference from the general reflection source can be avoided, to reduce image matching difficulty, and improve image matching accuracy.

In some embodiments, the preset frequency may be a fixed frequency or a duty cycle, and the light source may flicker at the preset frequency. It should be understood that the fixed frequency or the duty cycle may be adjusted based on an actual scenario, a design requirement, and the like, and is not limited to a specific value.

In some other embodiments, the preset frequency may further enable the light source to continuously emit light. For example, a duty cycle of the preset frequency may be 1.

In addition, the preset frequency may be higher than 60 Hz. It should be understood that a flicker frequency that can be identified by a human eye is generally 60 Hz. Based on this, when the light source flickers at a frequency higher than 60 Hz, it may also be understood from a perspective of the user that the light source continuously emits light.

In some embodiments, the preset frequency may further cooperate with monochromatic light of different colors, to further improve recognition of the general reflection source and the cat-eye reflection source. It should be understood that, because there may be a large quantity of general reflection sources in the to-be-detected region, the general reflection sources may reflect daylight or light to form a bright spot in the photo. Based on this, the light source emits the monochromatic light of the different colors, so that interference from the general reflection sources can be eliminated, to improve accuracy of detection on the optical camera.

In the foregoing example, at the first moment for obtaining the first photo and the second moment for obtaining the second photo, colors of the monochromatic light emitted by the light source may be the same or different, and preset frequencies may also be the same or different. For example, at the first moment and the second moment, the monochromatic light has a same color and preset frequencies are the same. Alternatively, at the first moment and the second moment, the monochromatic light has different colors, but preset frequencies are the same.

In an actual scenario, when a real object is a steady-on interference source, the steady-on interference source may also form bright spots on the two or more photos, but the steady-on interference source is generally not affected by a light source with a preset frequency. Therefore, in the detection method provided in embodiments of this application, based on cooperation between the light source with the preset frequency and the camera, the steady-on interference source can be distinguished, to reduce interference and facilitate identification of the optical camera.

An example in which the optical camera and a steady-on interference source emitting white light exist in the to-be-detected region is used for description. In the obtained two or more photos, bright spots corresponding to the optical camera and the steady-on interference source may appear in the ROI. The bright spot corresponding to the optical camera is affected by a color of monochromatic light and a preset frequency, and has corresponding feature information such as a color and brightness. Therefore, it may be determined that the bright spot is a bright spot whose location is unchanged. A bright spot corresponding to the steady-on interference source is difficult to be affected by the color of monochromatic light and the preset frequency. Therefore, the bright spot has basically consistent feature information in different photos, and the bright spot may be excluded from the bright spot whose location is unchanged. Alternatively, the bright spot may be marked in the photo, so that the user confirms the bright spot again.

By performing image matching on one, two, or more ROIs and analyzing feature information of each bright spot, it may be determined whether each ROI has a bright spot corresponding to a cat-eye reflection source, to facilitate subsequent operations such as continuous tracking or prompting.

In some embodiments, for a bright spot that is determined to correspond to the cat-eye reflection source, the detection method may further include the following steps.

The bright spot corresponding to the cat-eye reflection source is continuously tracked by using an algorithm like image tracking.

It should be understood that, based on the algorithm like image tracking, for bright spots formed by a same reflection source in photos, a relationship may be established between the bright spots. Based on this, reflection sources and the bright spots can correspond to each other, to avoid an error of a correspondence between the bright spots and the reflection sources, to improve accuracy of detection on the optical camera.

In some embodiments, when it is determined that the bright spot corresponding to the cat-eye reflection source exists in the two or more photos, the user may be notified on the electronic device by using a pop-up prompt, a voice prompt, or the like, so that the user searches for the corresponding cat-eye reflection source easily.

Refer to FIG. 11. An embodiment of this application further provides still another electronic device-based optical camera detection method. The detection method includes but is not limited to the following steps.

S211: An electronic device obtains at least two photos through cooperation between a light source and at least two cameras.

In some embodiments, when the electronic device has two or more cameras, at least two cameras may be selected, to obtain at least two photos of external space. "A plurality of" means at least three (including three).

As shown in FIG. 3, at least two cameras in the cameras (12a to 12d) may be selected. As shown in FIG. 4, at least two cameras in the cameras (16a to 16d) may be selected.

For another example, the electronic device may include a wide-angle camera, a long-focus camera, and a flash. If distances between the two cameras, namely, the wide-angle camera and the long-focus camera, and the flash are different, the wide-angle camera and the long-focus camera may be selected to obtain the photos of the to-be-detected region.

In some embodiments, distances between the at least two cameras and the light source may be different. Based on this, in the photos obtained via the cameras, bright spots corresponding to a cat-eye reflection source may be greatly different. Therefore, image matching difficulty can be reduced, and accuracy of detection on an optical camera can be improved. It should be understood that, when a plurality of cameras are used to obtain a plurality of photos, distances between at least two cameras in the plurality of cameras and a flash are different, and it is not necessarily required that distances between all the cameras and the flash are different.

As described above, when two or more photos are obtained via at least two cameras, the electronic device may move or not move for an appropriate distance.

With reference to the foregoing content, the two or more photos obtained via the at least two cameras may be generally understood as being obtained at a same moment (or synchronously), but may also be obtained at different moments (or asynchronously). This is not limited.

For the two or more photos obtained at the different moments, turn-on statuses of the corresponding light sources may be the same or different. This is not limited. For example, the light source emits white light at both a first moment and a second moment. For another example, at a first moment, the light source emits white light; and at a second moment, the light source emits yellow light.

S212: The electronic device calculates feature information of bright spots of the two or more photos in an overlapping region.

Step S212 is basically the same as step S202 in the foregoing other embodiments. Details are not described herein again.

In some embodiments, after the two or more photos are obtained, matching may be performed on the photos by using an algorithm like image matching.

It should be understood that, compared with that of at least two photos obtained by one camera at different angles, a range of an overlapping region or an ROI of at least two photos obtained via the at least two cameras are large, to further improve efficiency of detection on the to-be-detected region.

S213: The electronic device determines whether feature information of a bright spot in the overlapping region changes.

When the photos are obtained via the at least two cameras, based on a feature that the cat-eye reflection source has a return path basically close to a path of incident light, a bright spot corresponding to the cat-eye reflection source can be seen by using a photo obtained via a camera close to the light source. Different from that obtained by the camera close to the light source, a bright spot obtained via a camera far away from the light source is greatly different from the bright spot obtained via the camera close to the light source. For example, the bright spots are different in terms of brightness, a color, a shape, and the like. Alternatively, it is difficult to obtain the bright spot corresponding to the cat-eye reflection source by using a photo obtained via a camera far away from the light source.

It should be understood that, different from the cat-eye reflection source, feature information of bright spots formed based on a general reflection source in a plurality of photos is basically consistent.

S214: When the feature information of the bright spot in the overlapping region changes, the electronic device determines that the optical camera exists in the overlapping region.

Based on this, image matching is performed on the photos, to search for bright spots whose feature information changes or changes greatly in different photos. A real object corresponding to the bright spots whose feature information changes or changes greatly may be the cat-eye reflection source.

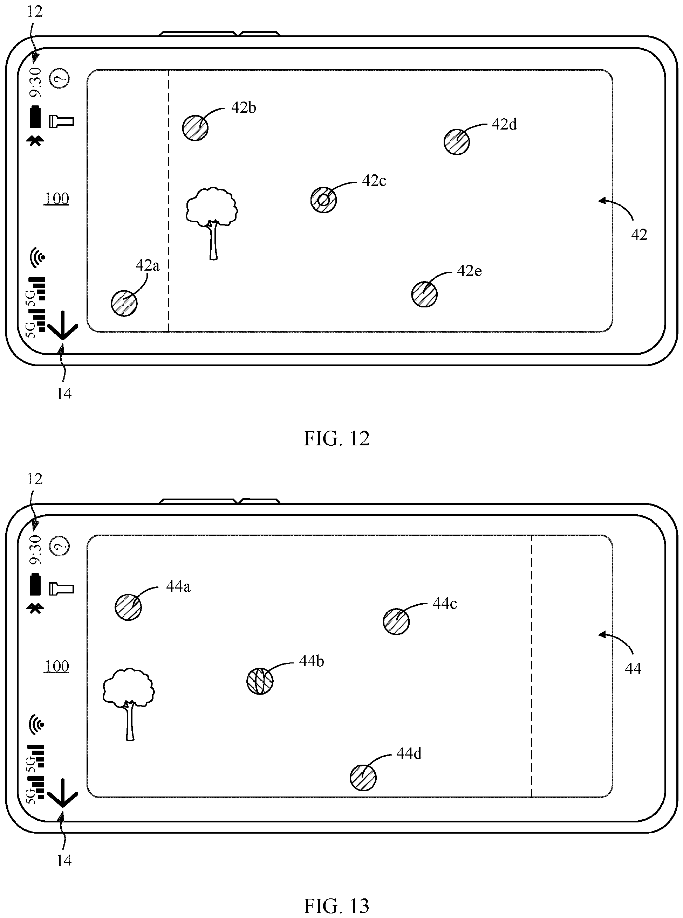

Refer to both FIG. 12 and FIG. 13. An example in which the electronic device separately obtains a first photo and a second photo via two cameras is used for description.

A first photo 42 is recognized by using an image feature recognition algorithm. The electronic device may determine that the first photo 42 includes, for example, five bright spots (42a, 42b, 42c, 42d, 42e). As described above, the bright spots (42a to 42e) may be formed when light of the light source is reflected from the general reflection source or the cat-eye reflection source and captured by the cameras.

Similar to the first photo 42, a second photo 44 is recognized by using the image feature recognition algorithm. The electronic device may determine that the second photo 44 includes, for example, four bright spots (44a, 44b, 44c, 44d). An overlapping region exists between the second photo 44 and the first photo 42. The first photo 42 includes four bright spots (42b to 42e) in the overlapping region, and the second photo 44 includes four bright spots (44a to 44d) in the overlapping region.

By performing image matching on the first photo 42 and the second photo 44, the electronic device may determine that the bright spot 42b and the bright spot 44a correspond to a same real object. The bright spot 42c and the bright spot 44b correspond to a same real object, the bright spot 42d and the bright spot 44c correspond to a same real object, and the bright spot 42e and the bright spot 44d correspond to a same real object. Feature information of each bright spot in a ROI is analyzed. Feature information of the bright spot 42b is basically the same as that of the bright spot 44a. It can be determined that the two bright spots (42b, 44a) are formed through reflection of a general reflection source. The bright spot 42d and the bright spot 44c are formed through reflection of a general reflection source, and the bright spot 42e and the bright spot 44d are formed through reflection of a general reflection source. Feature information of the bright spot 42c and the bright spot 44b changes greatly, and it may be determined that the two bright spots (42c, 44b) are formed through reflection of the cat-eye reflection source.

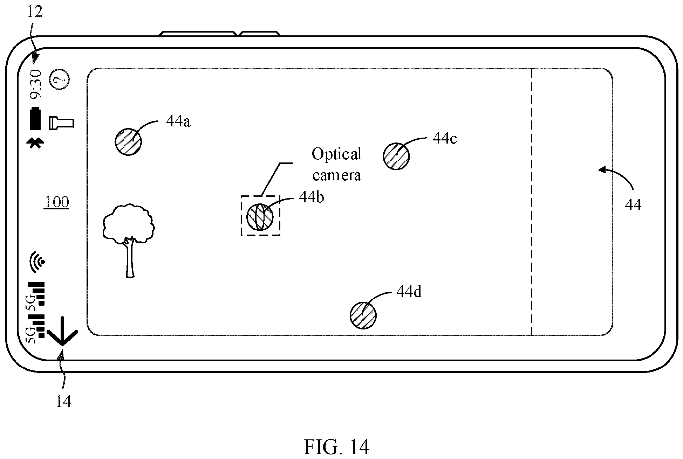

In some embodiments, for the identified optical camera, the electronic device may mark the bright spots (42c, 44b) corresponding to the optical camera in the obtained first photo 42 or the obtained second photo 44. As shown in FIG. 14, the electronic device marks the bright spot 44b in the second photo 44, and marked content is, for example, "Optical camera".

In some other embodiments, the electronic device may mark, in the obtained first photo 32 or second photo 34, bright spots (42b, 42d, 42e, 44a, 44c, 44d) corresponding to the general reflection sources.

In some embodiments, the detection method further includes: When a brightness change of a bright spot in the overlapping region is greater than a brightness threshold, the electronic device determines that a real object corresponding to the bright spot is the optical camera.

As explained above for the cat-eye effect, when the optical camera reflects the light emitted by the light source, the light is reflected in a direction of the light source. The reflected light may be received by the camera to form bright spots on the photo. It should be understood that, because distances between different cameras and the light source are different, for the camera close to the light source, the camera may receive more light, to form a bright spot with higher brightness. For the camera far away from the light source, the camera may receive less light, and light reflected by the optical camera may form a bright spot with lower brightness. Based on this, brightness of the optical camera in the different photos differs greatly. Therefore, when a brightness change of bright spots corresponding to a same object in the different photos is greater than the brightness threshold, it may be determined that the real object corresponding to the bright spot is the optical camera.

In some embodiments, interference from the general reflection source may be eliminated with reference to a feature of monochromatic light of the light source in a color or a preset frequency and feature information of the cat-eye reflection source, to determine a specific location of the optical camera.

In some embodiments, in an actual scenario, similar to that in another embodiment, because a steady-on interference source is generally not affected by a light source having a preset frequency and color, and feature information of the steady-on interference source in the different photos is basically consistent, the cat-eye reflection source and the steady-on interference source can be distinguished, to improve detection accuracy.

An embodiment of this application further provides a computer-readable storage medium, and the computer-readable storage medium stores instructions. The instructions are used to perform all or some steps in the foregoing detection methods. The storage medium may include a medium that can store instructions, for example, a USB flash drive, a removable hard disk, a read-only memory, a random access memory, a magnetic disk, or an optical disc. This is not limited.

In some embodiments, according to the foregoing instructions, the electronic device may perform the foregoing detection method, and present a detection result on a screen of the electronic device.

In some other embodiments, according to the foregoing instructions, the user may perform a simple operation, and the electronic device may respond to the operation of the user to complete the foregoing detection method, and present a detection result on a screen of the electronic device.

## Claims

1. An electronic device-based optical camera detection method, comprising:
obtaining, by an electronic device, two or more photos through cooperation between a light source and a camera, wherein the two or more photos have bright spots, and the two or more photos partially overlap;
calculating, by the electronic device, feature information of bright spots of the two or more photos in an overlapping region; and
determining, by the electronic device based on the feature information of the bright spots, whether an optical camera exists in the overlapping region.

2. The detection method according to claim 1, wherein the obtaining, by an electronic device, two or more photos through cooperation between a light source and a camera specifically comprises:
controlling, by the electronic device, the light source to emit light at a preset frequency; and
performing, by the electronic device, exposure and image capture at different locations via one camera, to obtain the two or more photos.

3. The detection method according to claim 2, wherein the determining, by the electronic device based on the feature information of the bright spots, whether an optical camera exists in the overlapping region specifically comprises:
analyzing, by the electronic device, the feature information of the bright spots in the overlapping region;
determining, by the electronic device, whether a bright spot whose location is unchanged exists in the overlapping region; and
when the bright spot whose location is unchanged exists in the overlapping region, determining, by the electronic device, that the bright spot whose location is unchanged is the optical camera.

4. The detection method according to claim 1, wherein the obtaining, by an electronic device, two or more photos through cooperation between a light source and a camera specifically comprises:
controlling, by the electronic device, the light source to emit light at a preset frequency; and
performing, by the electronic device, exposure and image capture via at least two cameras, to obtain the two or more photos.

5. The detection method according to claim 4, wherein the at least two cameras are two cameras, and distances between the two cameras and the light source are different; or
the at least two cameras are a plurality of cameras; and in the plurality of cameras, distances between at least two cameras and the light source are different.

6. The detection method according to claim 4, wherein the determining, by the electronic device based on the feature information of the bright spots, whether an optical camera exists in the overlapping region specifically comprises:
analyzing, by the electronic device, the feature information of the bright spots in the overlapping region;
determining, by the electronic device, whether feature information of a bright spot in the overlapping region changes; and
when the feature information of the bright spot in the overlapping region changes, determining, by the electronic device, that the bright spot whose feature information changes is the optical camera.

7. The detection method according to any one of claims 1 to 6, wherein the calculating, by the electronic device, feature information of bright spots of the two or more photos in an overlapping region specifically comprises:
performing, by the electronic device, image matching on the two or more photos, to determine the overlapping region;
marking, by the electronic device, locations of the bright spots in the two or more photos; and
calculating, by the electronic device based on the overlapping region, the feature information of the bright spots located in the overlapping region.

8. The detection method according to claim 1, wherein after the determining, by the electronic device based on the feature information of the bright spots, whether an optical camera exists in the overlapping region, the method further comprises:
when it is determined that the optical camera exists in the overlapping region, saving or marking, by the electronic device, a photo comprising the optical camera; and
presenting, by the electronic device, the photo comprising the optical camera.

9. The detection method according to claim 1, wherein after the determining, by the electronic device based on the feature information of the bright spots, whether an optical camera exists in the overlapping region, the method further comprises:
when it is determined that the optical camera exists in the overlapping region, continuously tracking, by the electronic device, a bright spot corresponding to the optical camera.

10. The detection method according to any one of claims 1 to 9, wherein the light source is an external light source; or the light source is a flash of the electronic device.

11. The detection method according to claim 10, wherein the light source is configured to emit one, two, or more types of monochromatic light; and the feature information of the bright spots comprises color information corresponding to the monochromatic light.

12. The detection method according to any one of claims 1 to 11, wherein the feature information comprises one, two, or more types of information of a location, brightness, a color, and a shape of the bright spot in the photo.

13. A computer-readable storage medium, wherein the computer-readable storage medium stores instructions, and the instructions are used to perform the detection method according to any one of claims 1 to 11.

14. An electronic device-based optical camera detection method, wherein the detection method comprises:
sequentially obtaining, by an electronic device, a first photo and a second photo via one camera based on a light source, wherein both the first photo and the second photo have bright spots, and the first photo and the second photo partially overlap;
separately calculating, by the electronic device, location information of bright spots of the first photo and the second photo in an overlapping region;
determining, by the electronic device, whether a bright spot whose location is unchanged exists in the overlapping region; and
when the bright spot whose location is unchanged exists in the overlapping region, determining, by the electronic device, that the bright spot whose location is unchanged is an optical camera.

15. The detection method according to claim 14, wherein the sequentially obtaining, by an electronic device, a first photo and a second photo via one camera based on a light source specifically comprises:
controlling, by the electronic device, the light source to emit light at a preset frequency; and
performing, by the electronic device, exposure and image capture at different locations via the camera, to obtain the first photo and the second photo.

16. The detection method according to claim 14 or 15, wherein the separately calculating, by the electronic device, location information of bright spots of the first photo and the second photo in an overlapping region specifically comprises:
determining, by the electronic device, the overlapping region of the first photo and the second photo; and
marking, by the electronic device, a location of a bright spot of the first photo in the overlapping region, and marking a location of a bright spot of the second photo in the overlapping region.

17. An electronic device-based optical camera detection method, wherein the detection method comprises:
simultaneously obtaining, by an electronic device, a first photo and a second photo via two cameras based on a light source, wherein both the first photo and the second photo have bright spots, and the first photo and the second photo partially overlap;
calculating, by the electronic device, brightness information of bright spots of the first photo and the second photo in an overlapping region;
determining, by the electronic device, whether brightness information of a bright spot in the overlapping region changes; and
when a bright spot whose brightness change is greater than a brightness threshold exists in the overlapping region, determining, by the electronic device, that the bright spot whose brightness change is greater than the brightness threshold is an optical camera.

18. The detection method according to claim 17, wherein the simultaneously obtaining, by an electronic device, a first photo and a second photo via two cameras based on a light source specifically comprises:
controlling, by the electronic device, the light source to emit light at a preset frequency; and
simultaneously performing, by the electronic device, exposure and image capture via the two cameras, to obtain the first photo and the second photo.

19. The detection method according to claim 17, wherein the calculating, by the electronic device, brightness information of bright spots of the first photo and the second photo in an overlapping region specifically comprises:
determining, by the electronic device, the overlapping region of the first photo and the second photo; and
calculating, by the electronic device, brightness of a bright spot of the first photo in the overlapping region, and calculating brightness of a bright spot of the second photo in the overlapping region.
